# EUROPEAN PATENT APPLICATION

(11) **EP 3 632 655 A1**
(43) Date of publication of application: **08.04.2020**
(21) Application number: 18382697.3
(22) Date of filing: 02.10.2018
(51) Int. Cl.: B29C 64/35, B29C 64/129, B29C 64/112, B29C 64/118, B33Y 30/00, B33Y 40/00

(54) **3D PRINTING MACHINE AND METHOD**

(71) Applicant: Universitat Politècnica De Catalunya, 08034 Barcelona (ES)
(72) Inventor: MUGURUZA BLANCO, Asier, 08690 Santa Coloma de Cervelló (ES); BONADA BO, Jordi, 17500 Ripoll (ES); MINGUELLA CANELA, Joaquim, 08030 Barcelona (ES); GÓMEZ FERNÁNDEZ, Agustín, 08902 L'Hospitalet de Llobregat (ES)
(74) Representative: Juncosa Miró, Jaime

(57) **Abstract**

Three-dimensional printing machine comprising a frontal photopolymerization printing station (10) including a printing basin (11) filled with a photo-curable polymer (12) and an image-forming light energy emitter (14) directed against the photo-curable polymer (12); a cleaning station (20) including a cleaning basin (21) filled with a cleaning liquid (22); a deposition printing station (30) including at least one deposition head (31) oriented downwards and movable across a deposition printing area by an actuator device (32); a platform (40) connected to a transport device (41) configured to move it from the frontal photopolymerization printing station (10) to the cleaning station (20) and to a printing position below the deposition printing area of the deposition printing station (30).

## Description

### Technical field

The present invention relates to a 3D printing method combining a first 3D printed model printed with a first material including photo-curable polymer by a frontal photopolymerization process and a second 3D printed model printed with a second material by a deposition process.

The frontal photopolymerization process is an additive printing process wherein a first material including photo-curable polymer are consolidated inducing the photo polymerization of selected regions of a provided first material by the application of light energy on said selected regions to be consolidated, and the first material not consolidated by the light energy is eliminated at the end of the printing process. The light energy causes chains of molecules of the first material to link, forming polymers.

Said first material is provided as a layer in a liquid state. The light energy can be preferably applied in a bi-dimensional surface (MIP-SL), but also in a succession of lines or in a succession of points (SLA) producing the consolidation of the selected regions of the layer of first material, producing a consolidated layer overlapped to the previous consolidated layers. The deposition process is an additive manufacturing process wherein the second group of materials are deposited through a nozzle or a number of nozzles over selected regions at will. Said second materials can be solidified by controlling the room temperature, by evaporation of solvent, or by polymerization under light energy. Examples of deposition process are the fused filament fabrication which extrudes fused second material, the inkjet 3D printing which projects droplets of fused or liquid second material which solidify after impacting on the selected region and the Direct Ink Writing process which extrudes a viscoelastic ink.

The frontal photopolymerization process can create each layer faster than the deposition process, thus each layer can be created rapidly by the projection of an image whatever its size or shape. On the contrary the printing time of the deposition process depends on the size and the shape of the object to be printed but it can be made with different materials with different optical or electric or magnetic or physic properties, with a lower thickness than the frontal photopolymerization process.

### State of the Art

Many different tri-dimensional printing technologies are known in the state of the art, each technology having advantages and disadvantages. For example, some technologies are faster but have less resolution, and other technologies require the use of a very specific printing material which properties cannot be freely adapted to different requirements.

The three-dimensional printing technologies can be divided in two groups: (i) printing technologies in which the material aportation is "in bed" and (ii) printing technologies in which the material aportation is "from the printing head".

The first group (i) include those technologies in which a layer of the printing material in disaggregate state, for example in liquid state or as a powder, is deposited covering the surface on which the 3D printed model shall be printed, and then only selected regions of said layer are consolidated applying light energy on it. This process is repeated successively and at the end the printing material in disaggregate state which has not been consolidated is discarded obtaining the 3D printed model.

Some of the technologies in this group are those in the family named stereolithography printing, and are known for example through documents US4575330, EP0171069 and JPS56144478.

The second group of technologies (ii) include those technologies in which the printing material is provided only on the selected regions and is instantly consolidated on those selected regions.

This group of technologies can be called deposition printing and include many different technologies, for example the fused filament fabrication described on document US 5121329 where a filament of printing material is fused usually by heat then extruded and deposited in the selected region by a deposition nozzle and immediately cooled to room temperature and consolidated. Also, inkjet printer systems can be included in this group, which spray an ultrathin layer of polymer on the selected regions producing its consolidation, for example using a photo-curable polymer and a light energy source to produce its consolidation.

It is also known in the art printing using simultaneously two or more different materials producing a complex 3D printed model including parts made of different materials usually using two deposition nozzles, one for each material, which are used alternatively or simultaneously on the printing of each layer.

Document US2011132767 describe a printing process using two or more different materials on each printed layer also including disaggregate material which can be removed after ending the printing process. According to this document different materials can be deposited on the same layer using a deposition printing or a stereolithography printing, but the two or more different materials shall be printed simultaneously or alternatively for each layer of the 3D printed model.

None of the previously known documents describe the combination of a stereolithography printing with a deposition printing, allowing combination of different materials with different capabilities and/or with very different layer thickness.

### Brief description of the invention

The present invention relates to a 3D printing method combining a first 3D printed model printed with a first material including photo-curable polymer by a frontal photopolymerization process and a second 3D printed model printed with a second material by a deposition process.

Said frontal photopolymerization process can be, according to a preferred embodiment, a stereolithography process.

The proposed three-dimensional printing machine for undertaking the method comprises:
- a frontal photopolymerization printing station including a basin filled with a photo-curable polymer which has an exposed upper surface and an image-forming light energy emitter directed against said exposed upper surface;
- a platform connected to a transport device configured to move said platform in a vertical direction between multiple submerged printing positions where the platform is submerged in the photo-curable polymer at different depths.

The frontal photopolymerization printing station, in combination with the platform connected to a transport device, permits to print an additive three-dimensional object over the platform submerging said platform in the photo-curable polymer at a depth coincident with the thickness of one layer of the printed material and producing the consolidation of selected areas of the photo-curable polymer placed on the exposed upper surface above the platform by the application of light energy dose emitted on said selected areas by the image-forming light energy emitter.

The platform is successively moved downwards submerging the depth of one layer to be printed each time and repeating the consolidation process through the application of light on the selected areas.

As a result, a three-dimensional object is produced with consolidated photo-curable polymer.

The image-forming light energy emitter can project an image on the exposed upper surface coincident with the areas of the layer to be printed using a digital mask image to deliver the specific light energy dose against said exposed upper surface, or can project a light dot moved across the exposed upper surface at high speed reproducing said image in seconds producing the consolidation of the selected areas.

This process is already known in the state of the art, but the present invention proposes a three-dimensional printing machine which also includes following features in a novel manner:
- a cleaning station including a basin filled with a cleaning liquid or a basin filled with a cleaning liquid in contact with a vibration generator;
- a deposition printing station including at least one deposition head oriented downwards and movable in a horizontal direction on a deposition printing area;
- the transport device being also configured to move said platform from the frontal photopolymerization printing station to a submerged cleaning position in the cleaning liquid of the cleaning station and to an emerged printing position below the deposition printing area of the deposition printing station at a multiple vertical distances thereof.

In other words, the proposed three-dimensional printing machine combine a frontal photopolymerization printing station and a deposition printing station, including also a cleaning station and a transport device which can move the platform in which the three-dimensional object is printed to any of said stations.

The deposition printing is an additive printing process in which a printing head projects or delivers drops or strips of printing material in fluid state on selected areas where said printing material gets consolidated, for example by evaporation of a solvent, by cooling with a temperature control system included in the deposition printing station, or by photopolymerization.

Each three-dimensional printing technology has advantages and handicaps, for example the frontal photopolymerization process can create each layer faster than the deposition process, thus each layer can be created almost instantaneously, and enable thicknesses bigger than some deposition systems.

On the contrary, the printing time of the deposition process depends on the size and the shape of the object to be printed, being therefore a slower printing process specially for big objects, for example using inkjet printing which projects dots of printing material, similarly to the process used for the bi-dimensional inkjet printing, but then creating a very thin layers which will make the printing process very slow.

The combination in a single three-dimensional printing machine of both technologies permits to create a three-dimensional object which includes layers printed with different technologies, with different materials, with different properties and/or with different resolution, for example including conductive printed paths within a three-dimensional object printed with a nonconductive material.

Immediately after the printing using the frontal photopolymerization process, when the printed object is emerged from the basin, the printed object is normally covered with a layer of non-polymerized photo-curable polymer which will interfere in the deposition printing process.

Waiting until said layer is drained by gravity will slow down the printing process, therefore it is proposed the inclusion of a cleaning station, where the recently printed object can be submerged in a cleaning liquid, removing said layer of non-polymerized photo-curable polymer.

Optionally a vibration generator, for example an ultrasonic vibration generator, is in contact with the cleaning liquid, increasing its cleaning effect.

Once the cleaning has been performed, the platform can be transported by the transport device to the deposition printing station.

According to a preferred embodiment, the transport device will include a vertical transport device including a vertical actuator and a vertical guide member connected to the platform for the vertical movement of said platform, and a horizontal transport device including a horizontal actuator and a horizontal guide member connected to the vertical transport device for the horizontal movement of said vertical transport device.

The combination of both the vertical and the horizontal transport devices allows the movement of the platform not only up and down, to modify the submersion of the platform in the photo-curable polymer to perform the frontal photopolymerization printing, but also a horizontal movement to transport said platform to a different station of the proposed three-dimensional printing machine.

It is also proposed that the horizontal guide member include a vertical shaft, being the vertical transport device rotatively connected in cantilever to said vertical shaft, and being the frontal photopolymerization printing station, the deposition printing station and the cleaning station surrounding said vertical shaft. This configuration determines that the horizontal transport device is a rotating transport device, being the different stations of the three-dimensional printing machine arranged around said vertical shaft in a circular configuration, in different angular positions.

It is also proposed that the platform of the frontal photopolymerization printing station includes a horizontal rotation axis so to present the first 3D printed model at any angle to the deposition printing station.

The frontal photopolymerization printing station is protected from the ambient light by a cover which contents the image-forming light energy emitter.

In a preferred embodiment an annular lid protect the frontal photopolymerization printing station, the deposition printing station and the cleaning station from the ambient light, said annular lid being supported on the horizontal transport device and integrating said cover which contains the image-forming light energy emitter and also which contains the vertical transport device, said cover being positionable with correspondence with at least the frontal photopolymerization printing station, and with the cleaning station.

According to this configuration all the stations surrounding the vertical shaft are covered and protected from light by a rotative lid which includes a cover, preferably a protruding cover which determines a hollow inner space which contains the vertical transport device and the platform. Said lid and cover rotates positioning the cover in correspondence with one of the stations of the three-dimensional printing machine, positioning the hollow inner space above said station, and the actuation of the vertical transport device can then place the platform in the necessary level to interact with said station.

Preferably the deposition printing station is also contained in said cover integrated in the rotative lid, connected to the horizontal transport device. According to that, the printing heads of the deposition printing station will be in an upper area of the cover, above the platform, and said platform can be moved up and down by the vertical transport device in order to put the platform or the already printed object at the right distance from the printing heads of the deposition printing station in order to allow the printing of an additional layer by said printing heads.

Using this configuration, the printing of the deposition printing station can be performed regardless of the position of the lid and the cover, but preferably said printing process of the deposition printing station will be not performed over the basin of the frontal photopolymerization printing station, in order to prevent contamination of the photo-curable polymer contained in said basin.

If the printing material of the deposition printing station is a photo-curable polymer, the deposition printing station shall include a light energy emitter which emits light while or straight after the deposition process is performed. In such a case the deposition printing cannot be performed over the frontal photopolymerization printing station, because the light emitted could produce the uncontrolled consolidation of the photo-curable polymer contained in the basin of the frontal photopolymerization printing station.

In a proposed embodiment the basin of the frontal photopolymerization printing station has a horizontal upper-facing edge surrounded with a collection channel and a pumping device connected to said collection channel and to the basin to pump photo-curable polymer from the channel in the basin until produce its overflowing, assuring that the photo-curable polymer is always leveled with the horizontal upper-facing edge of the basin.

In that case, a wiper device will be connected to a wiper actuator device and configured to be moved along the exposed upper surface to eliminate imperfections between the printings of each layer.

It is also proposed that the cover includes vertical anti-split shields adjacent to the vertical projection of the platform, each vertical anti-split shield include a matrix of holes, each connected with a blowing device. Said anti-split shield protect the cover from being stained during the printing process, and the blowing can be used to blow heated or cooled gas in order to achieve a better control of the polymerization process, or to accelerate the evaporation or consolidation process.

Multiple frontal photopolymerization printing stations can be integrated in the printing machine, each having different photo-curable polymer and/or a photo-curable polymer having different additives able to change its physical and chemical properties.

The layer thickness of the layers printed in the frontal photopolymerization printing stations can have a different thickness than the layers printed in the deposition printing process. Only by way of a non-limiting example, the voxel size layers printed in the frontal photopolymerization printing stations is about 10 to 50 micrometers and/or the voxel size layers printed in the deposition printing station is about 10 to 50 nanometers, so both printing stations can print with different resolutions.

The cover can be totally or partially filled with a non-reactive gas under specific conditions as pressure and temperature, in order to improve the polymerization process.

According to one proposed embodiment, the printing product of the deposition printing station has different light conductive properties, electric conductive properties, thermal conductive properties, different magnetic properties and/or different mechanical properties than the consolidated photo-curable polymer printed in the frontal photopolymerization printing station.

For example, using a printing product of the deposition printing station electrically conductive, objects can be printed including electrically conductive paths therein, creating circuits.

Alternatively, using materials with different magnetic properties, antennas or sensors can be created.

According to a second aspect of the present invention, it is proposed a three-dimensional printing method implemented in the three-dimensional printing machine described above.

Said proposed include performing following steps:
- move the platform to a multiple submerged printing positions where the platform is submerged in the photo-curable polymer at a different depths, activating the image-forming light energy emitter between each activation of the transport device producing multiple overlapped solid printed layers of polymerized photo-curable polymer;
- move the platform from the frontal photopolymerization printing station to a submerged cleaning position in the cleaning liquid of the cleaning station;
- move the platform to an emerged printing position below the deposition printing area of the deposition printing station at a multiple vertical distances thereof, activating the deposition head between each activation of the transport device producing multiple overlapped solid printed layers on top of the printed layers previously obtained in the frontal photopolymerization printing station. All movements can be performed in any Cartesian or angular displacements

It is also proposed that the deposition head projects a printing product on uneven and/or ramped surfaces of the three-dimensional printed object previously produced in the frontal photopolymerization printing station, producing a non-flat layer of printed product.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and not limitative, in which:

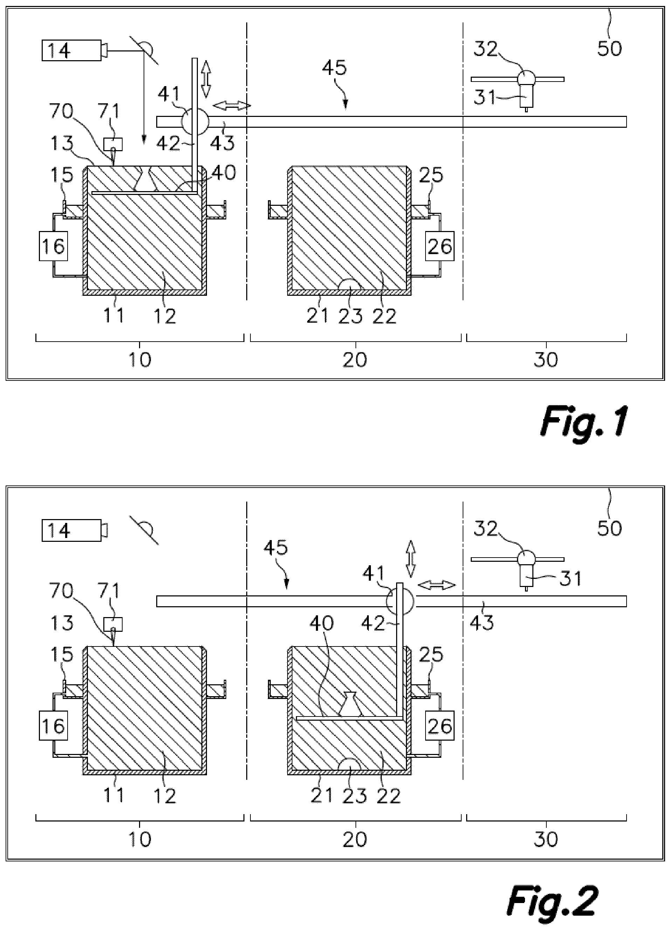

Fig. 1 shows an schematic view of the proposal according to a first embodiment which include one frontal photopolymerization printing station including a printing basin and an image-forming light energy emitter, one cleaning station including a cleaning basin and one deposition printing station including one deposition head oriented downwards, the printing machine further including a platform connected to a transport device configured to move laterally said platform from one station to another and to move said platform vertically introducing it into said basins, in this embodiment the platform being placed into the printing basin of the frontal photopolymerization printing station;
Fig. 2 shows the same embodiment shown on Fig. 1 but with the platform introduced into the cleaning basin of the cleaning station;
Fig. 3 shows the same embodiment shown on Fig. 1 but with the platform placed in the deposition printing station facing the deposition head;
Fig. 4 shows an exploded perspective view of an alternative embodiment of the printing machine in which the transport device is configured to rotate the platform around a vertical shaft to transport said platform to different angular positions around said vertical shaft, being the frontal photopolymerization printing station, the cleaning station and the deposition printing station disposed around said vertical shaft;
Fig. 5 shows an assembled perspective view of the printing machine shown on Fig. 4 but without the cover;
Fig. 6 shows a vertical section of the printing machine shown on Fig. 5 including the cover, with the platform introduced into the printing basin.

### Detailed description of an embodiment

According to a schematic view of a first embodiment of the proposed printing machine, shown on Figs. 1, 2 and 3, the printing machine include three stations 10, 20, 30 and a platform 40 connected to a horizontal transport device 45, integrated in a transport device 41, which is configured to move said platform 40 from one station 10, 20, 30 to another along a horizontal guide member 43.

The platform 40 is a horizontal surface where a model is supported while it is being printed by the printing machine, so the transport of the platform 40 also moves the printed model from one station 10, 20, 30 to another.

Said three stations 10, 20, 30 are a frontal photopolymerization printing station 10, where a stereolithographic printing process is performed using photo-curable polymer 12, a cleaning station 20 where the printed model is cleaned to remove photo-curable polymer 12 excess, and a deposition printing station 30 where a deposition head 31 print on the top level of the already printed model on the frontal photopolymerization printing station 10.

The frontal photopolymerization printing station 10 includes a printing basin 11 totally filled with a photo-curable polymer 12 to the brim, which in this embodiment is a beveled horizontal upper edge, defining an upper surface 13 of the photo-curable polymer 12, where an incident light will produce the consolidation of said photo-curable polymer 12.

Surrounding said horizontal upper edge there is a collection channel 15 which collects the photo-curable polymer 12 that overflows the horizontal upper edge of the printing basin 11. A pumping device 16 pumps the photo-curable polymer 12 from the collection channel 15 into the printing basin 11 assuring that said printing basin 11 is always filled to the horizontal upper edge.

The frontal photopolymerization printing station 10 also include an image-forming light energy emitter 14 which projects a light beam with the shape of one layer of the model to be printed on the upper surface 13 of the photo-curable polymer 12 contained in the printing basin 11, producing the consolidation of a layer of photo-curable polymer 12 with the shape of the projected image.

In this embodiment the projected image emitted by the image-forming light energy emitter 14 is reflected on a mirror. In this case the projected image shall be modified considering the inversion of the image produced due the mirror reflection.

In an alternative embodiment the image-forming light energy emitter 14 will emit a laser-like beam of light which will be reflected on a galvanometer mirror which will be controlled to direct said laser-like beam of light to the upper surface 13 of the light-curing polymer 12 and moved therethrough reproducing the shape of layer of the model to be printed.

Said frontal photopolymerization printing station 10 shall be protected from the ambient light to prevent the undesired consolidation of the light-curing polymer 12. In this embodiment the whole printing machine is included within a cover 50.

The cleaning station 20 include a cleaning basin 21 filled with cleaning liquid 22. In this embodiment a vibration generator 23 is included within said cleaning basin 21 to produce vibrations on the cleaning liquid 22 increasing its cleaning capabilities but being said vibration generator 23 optional. Said vibration generator 23 can also be placed outside the cleaning basin 21 or attached to the platform 40.

Surrounding a horizontal upper edge of the cleaning basin there is a collection channel 25 which collects the cleaning liquid 22 that overflows the horizontal upper edge of the printing basin 11. A pumping device 26 pumps the cleaning liquid 22 from the collection channel 25 into the cleaning basin 21 assuring that said cleaning basin 21 is always filled to the horizontal upper edge.

The deposition printing station 30 includes a one deposition head 31 oriented downwards and movable in two orthogonal horizontal directions on a deposition printing area by an actuator device 32.

The transport device 41 also includes a vertical transport device 46 which moves the platform 40 vertically following a vertical guide member 42.

Said vertical movement of the platform 40 allow the submersion of the platform 40 into the light-curing polymer 12 when the platform 40 is in the frontal photopolymerization printing station 10, or into the cleaning liquid 22 when the platform is in the cleaning station 20 cleaning the excess of photo-curing polymer 12 not consolidated covering the printed model after its submersion in the photo-curing polymer 12.

So that, the transport device 41 can submerge the platform at a desired depth, to place the platform 40 near the upper surface 13 covered only with a thin layer of photo-curing polymer of a thickness equal to the thickness of a layer of the model to be printed, or submerging the platform with a partially printed model thereon to place the upper area of the partially printed model near the upper surface 13 covered only with a thin layer of photo-curing polymer of a thickness equal to the thickness of a layer of the model to be printed. Repeating this process at a increasing depths of the platform 40 allow the addition of superposed layers of consolidated photo-curing polymer 12, each layer with the desired shape correspondent with the image projected on the upper surface 13 by the image-forming light energy emitter 14.

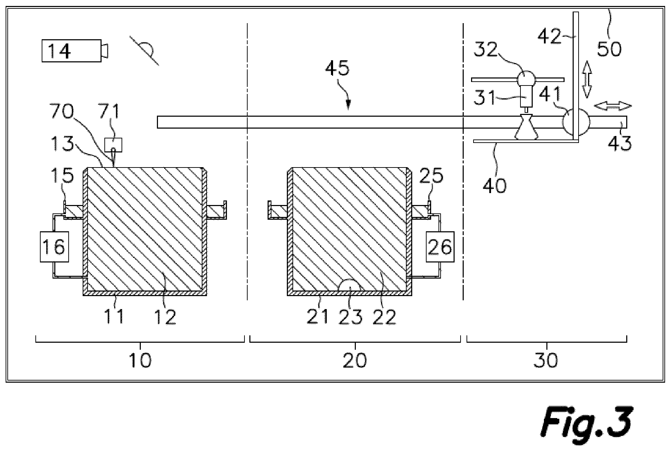

Also, when the platform 40 is in the deposition printing station 30, as shown on Fig. 3, the vertical transport device 46 of the transport device 41 can place the platform 40 or the upper area of a partially printed model supported on the platform 40 coincident with the printing area of said at least one deposition head 31, so that the deposition head 31 can deposit a new printed layer thereon. This process can be repeated adding additional deposited layers thereon by moving the platform 40 downwards a distance equal to the thickness of the deposited layer.

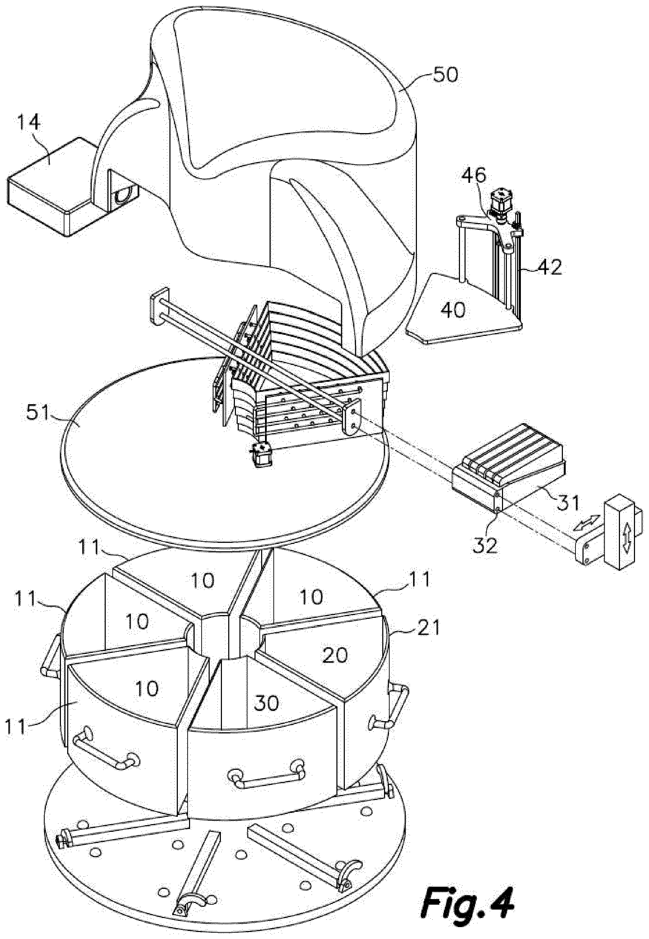

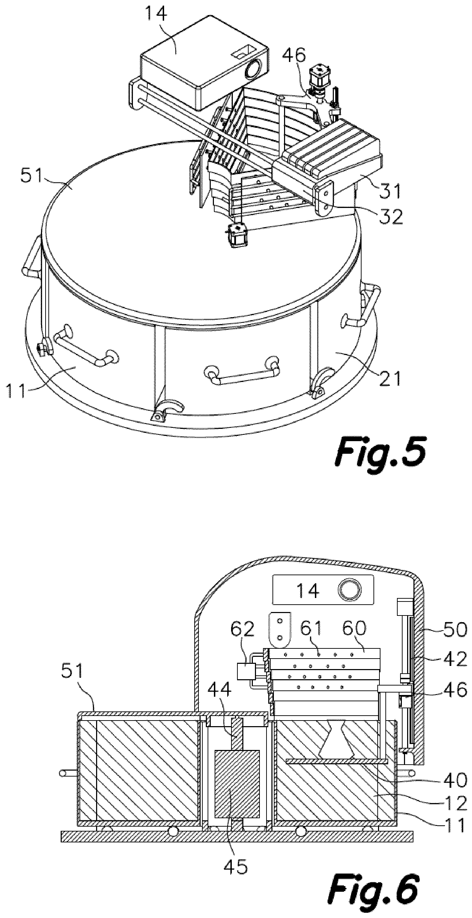

Figs. 4, 5 and 6 show an alternative embodiment of the printing machine, according to which the different stations 10, 20, 30 are surrounding a vertical shaft 44 (Fig. 6), in different angular positions, each occupying an angular sector.

In this embodiment the printing machine includes six different stations, for example four different frontal photopolymerization printing stations 10, each having its own printing basin 11 which can be filled with different photo-curable polymers 12, for example each printing basin 11 having a photo-curable polymer 12 with a different optic and/or mechanic property, for example having different color or different flexibility.

Another station is the cleaning station 20, which includes the cleaning basin 21 filled with cleaning liquid 22.

In this example the last station is the deposition printing station 30, which does not require a basin filled with a liquid, therefore in this embodiment it is considered that the basin shown on the sixth position is empty, so that if during the deposition printing process some drops or particles of the deposited material fall down from the platform, those drops or particles will be collected in said empty basin without polluting the photo-curable polymer 12 of the printing basins 11.

In order to prevent the undesired consolidation of the photo-curable polymer 12 contained in the printing basins 11, all the basins are covered with an annular lid 51 connected to the vertical shaft 44, so that the activation of the horizontal transport device 45 produces its rotation.

Said annular lid 51 include a hole at least of the size of the platform 40, so that the rotation of the annular lid 51 permit positioning said hole in correspondence with one printing basin 11, facing the exposed upper surface 13 of the photo-curable polymer 12.

Surrounding said hole and attached to the annular lid 51 there is a cover 50 which protects the photo-curable polymer 12 exposed through said hole from the ambient light. Said cover rotates together with the annular lid 51.

Contained within said cover 50 and attached to it or to the annular lid 51, there are the image-forming light energy emitter 14, with a correspondent mirror, multiple deposition heads 31, with the correspondent actuator device 32, and a vertical transport device 46, with the correspondent vertical guide member 42, connected to the platform 40. All those elements will rotate together under the activation of the horizontal transport device 45.

The image-forming light energy emitter 14 creates a light beam with the shape of the next layer of the model to be printed in the frontal photopolymerization printing stations 10, said shape being provided by an electronic control device which contents the information of the model to be printed and which generates the shape of each overlapped layer necessary to generate said model.

In this embodiment, when the printing machine is positioned in the frontal photopolymerization printing stations 10 having the annular lid 51 its correspondent hole placed over a printing basin 11, the image-forming light energy emitter 14 projects an image in a horizontal direction against a mirror inclined 45° placed above the hole of the annular lid 51. Said mirror reflects the projected image in a downward vertical direction, said projected image passing through the hole in the annular lid 51 and reaching the exposed upper surface 13 of the light-curing polymer 12 of the printing basin 11 placed bellow said hole, producing the consolidation of a superficial layer of photo-curing polymer 12 with the shape of the projected image.

Also, in this embodiment the vertical transport device 46 is connected to a vertical guide member 42 attached to the inside face of the cover 50, in such a way that the vertical movement of the vertical transport device 46 along the vertical guide member 42 moves the platform 40 in a vertical direction, from an extracted position in which the platform is placed above the hole of the annular lid 51, and a submerged position in which the platform 40 is placed below the hole of the annular lid 51, the vertical transport device 46 producing the insertion of the platform 40 through said hole.

The horizontal transport device 45 places the hole of the annular lid 51, and also the platform 40 placed above said hole, in correspondence with one of the stations 10, 20, 30 or with one of the basins 11, 21. The vertical transport device 46 moves the platform 40 vertically to reach the right position to proceed with the printing or cleaning procedure on a model supported on said platform 40. So that the transport device 41, resulting of the combination of the horizontal transport device 45 and the vertical transport device 46, moves the platform 40.

In this embodiment the deposition head 31 is connected to an actuator device 32 which moves said deposition head 31 in a horizontal direction along horizontal guides which are attached to the cover 50.

The deposition printing station 30 includes, in this embodiment, four different deposition material deposits, each connected to a lineal array of deposition heads 31, each lineal array having a length equal to the printing area of the platform 40, so that a complete line can be printed simultaneously with any of the deposition materials. The movement of the depositions heads 31 across the printing area by the activation of the actuator device, which produces a translation shift along horizontal guides from a non-printing position, in which the printing heads 31 are on a side position not facing the platform 40, and any printing position above the platform 40 where the deposition heads 31 are placed on any position of the printing area. The movement of the deposition heads 31 across said printing area, in coordination with the activation of each individual deposition head 31 permits the precise deposition of material creating a layer with any desired shape on the printing area.

Preferably the deposition heads 31 remain on the non-printing position when the hole of the annular lid 51 is placed over a printing basin 11, avoiding an accidental contamination of the photo-curable polymer 12 with the deposition material.

Preferably there is an angular position of the annular lid 51 in which the hole is placed over an empty basin, an empty space or over a cover which occludes the hole. Said position will define the deposition printing station 30.

When the annular lid 51 is positioned with the hole coincident with said deposition printing station 30, que deposition heads 31 can be moved to any printing position proceeding with the deposition printing process without risk of contamination of the photo-curable polymer 12.

As will be understood, the array of aligned deposition heads 31 can be substituted by a single deposition head 31 in combination with an additional actuator device moving said deposition head in a horizontal direction perpendicular to the horizontal guides on which the deposition head 31 are slid by the actuator device 32, allowing the movement of the deposition head 31 in two orthogonal horizontal directions.

The cover 50 attached to the annular lid 51 can further include a vertical anti-splash shields 60 surrounding said hole of the annular lid 51, each vertical anti-split shield 60 including a matrix of holes 61, each connected with a blowing device 62. The air blown across the matrix of holes reduce the drops of photo-curing polymer 12 reaching the vertical anti-split shield 60 and helps to eliminate the excess of non-consolidated photo-curing polymer 12 covering the printed model when it emerges from the printing basin 11.

It is also proposed the inclusion of a wiper device 70 is connected to a wiper actuator device 71 and configured to be moved along the exposed upper surface 13 to eliminate imperfections or bubbles.

The printing machine shall include one different wiper device 70 for each printing basin 11 to prevent contamination between different photo-curable polymers 12.

It will be understood that various parts of one embodiment of the invention can be freely combined with parts described in other embodiments, even being said combination not explicitly described, provided there is no harm in such combination.

## Claims

1. Three-dimensional printing machine comprising:
• a frontal photopolymerization printing station (10) including a printing basin (11) filled with a photo-curable polymer (12) which has an exposed upper surface (13) and an image-forming light energy emitter (14) directed against said exposed upper surface (13);
• a platform (40) connected to a transport device (41) configured to move said platform (40) in a vertical direction between multiple submerged printing positions where the platform (40) is submerged in the photo-curable polymer at a different depths;
**characterized in that** the 3D printing machine further includes:
• a cleaning station (20) including a cleaning basin (21) filled with a cleaning liquid (22) or a cleaning basin (21) filled with a cleaning liquid (22) in contact with a vibration generator (23);
• a deposition printing station (30) including at least one deposition head (31) oriented downwards and movable across a deposition printing area by an actuator device (32);
wherein the transport device (41) is also configured to move said platform from the frontal photopolymerization printing station (10) to a submerged cleaning position in the cleaning liquid (22) of the cleaning station (20) and to an emerged printing position below the deposition printing area of the deposition printing station (30) at a multiple vertical distances thereof.

2. Three-dimensional printing machine according to claim 1 wherein the transport device (41) includes a vertical transport device (46), connected to the platform (40), including a vertical actuator and a vertical guide member (42) for the vertical movement of said platform (40), and said transport device (41) also including a horizontal transport device (45), connected to the vertical transport device (46), including a horizontal actuator and a horizontal guide member (43) for the horizontal movement of said vertical transport device (46).

3. Three-dimensional printing machine according to claim 2 wherein the horizontal guide member (43) is a vertical shaft (44), being the vertical transport device (46) rotatively connected in cantilever to said vertical shaft (44) and being the frontal photopolymerization printing station (10), the deposition printing station (30) and the cleaning station (20) surrounding said vertical shaft (44).

4. Three-dimensional printing machine according to any preceding claim wherein the frontal photopolymerization printing station (10) is protected from the ambient light by a cover (50) which content the image-forming light energy emitter (14).

5. Three-dimensional printing machine according to claim 3 wherein an annular lid (51) protect the frontal photopolymerization printing station (10), the deposition printing station (30) and the cleaning station (20) from the ambient light, said annular lid (51) being supported on the horizontal transport device (45) and integrating a cover (50) which contains the image-forming light energy emitter (14) and the vertical transport device (46), said cover being positionable with correspondence with at least the frontal photopolymerization printing station (10), and the cleaning station (20).

6. Three-dimensional printing machine according to claim 5 wherein the deposition printing station (30) is also contained in said cover (50), connected to the horizontal transport device (45).

7. Three-dimensional printing machine according to any preceding claim wherein the printing basin (11) has an horizontal upper edge surrounded with a collection channel (15) and a pumping device (16) connected to said collection channel (15) and to the printing basin (11) in order to pump photo-curable polymer (12) in the printing basin (11) until produce its overflowing, assuring that the photo-curable polymer (12) is always leveled with the horizontal upper edge of the printing basin (11).

8. Three-dimensional printing machine according to claim 7 wherein a wiper device (70) is connected to a wiper actuator device (71) and configured to be moved along the exposed upper surface (13) to eliminate imperfections or bubbles.

9. Three-dimensional printing machine according to claim 5 or 6 wherein the cover includes vertical anti-splash shields (60) adjacent to the vertical projection of the platform (40), each vertical anti-splash shield (60) includes a matrix of holes (61), each connected with a blowing device (62).

10. Three-dimensional printing machine according to any preceding claim wherein multiple frontal photopolymerization printing stations are integrated in the printing machine, each having different photo-curable polymer and/or a photo-curable polymer having different additives able to change its physical and chemical properties.

11. Three-dimensional printing machine according to claim 4 or 5 wherein the cover is totally or partially filled with a non-reactive gas under specific conditions of pressure and temperature.

12. Three-dimensional printing machine according to any preceding claim wherein the printing product of the deposition printing station has different physical properties, and/or different chemical properties, and/or different biological properties than the consolidated photo-curable polymer printed in the frontal photopolymerization printing station.

13. Three-dimensional printing method implemented in a three-dimensional printing machine described on any claim 1 to 12, **characterized in that** the method includes activate the transport device to:
• move the platform to a multiple submerged printing positions where the platform is submerged in the photo-curable polymer at different depths, activating the image-forming light energy emitter between each activation of the transport device producing multiple overlapped solid printed layers of polymerized photo-curable polymer;
• move the platform from the frontal photopolymerization printing station to a submerged cleaning position in the cleaning liquid of the cleaning station;
• move the platform to an emerged printing position below the deposition printing area of the deposition printing station at a multiple vertical distances thereof, activating the deposition head between each activation of the transport device producing multiple overlapped solid printed layers on top of the printed layers previously obtained in the frontal photopolymerization printing station.

14. Three-dimensional printing method according to claim 13 wherein the deposition head projects a printing product on uneven and/or ramped surfaces of the three-dimensional printed object previously produced in the frontal photopolymerization printing station, producing a non-flat layer of printed product.
